# EUROPEAN PATENT APPLICATION

(11) **EP 4 635 997 A1**
(43) Date of publication of application: **22.10.2025**
(21) Application number: 23904076.9
(22) Date of filing: 15.12.2023
(51) Int. Cl.: C08F 279/04, C08F 2/26, C08F 6/18

(54) **CONJUGATED DIENE-BASED POLYMER PREPARATION METHOD AND GRAFT COPOLYMER PREPARATION METHOD**

(30) Priority: 16.12.2022 KR 20220176493
(71) Applicant: LG Chem, Ltd., Seoul 07336 (KR)
(72) Inventor: SUK, Jae Min, Daejeon 34122 (KR); JEONG, Young Hwan, Daejeon 34122 (KR); LEE, Jin Hyoung, Daejeon 34122 (KR); KIM, Ki Hyun, Daejeon 34122 (KR); BAK, Chang Hong, Daejeon 34122 (KR); CHAE, Min Su, Daejeon 34122 (KR)
(74) Representative: Goddar, Heinz J.
(86) International application number: PCT/KR2023/020814
(87) International publication number: WO 2024/128877

(57) **Abstract**

The present invention relates to a method for preparing a conjugated diene-based polymer and a method for preparing a graft copolymer, more particularly, to a method for preparing a conjugated diene-based polymer, which may increase the particle size of the conjugated diene-based polymer without an additional process such as enlargement through agglomeration, or the increase of a polymerization time, and a method for preparing a graft copolymer, which may improve the impact strength of a resin composition even further from the conjugated diene-based polymer having an increased particle size.

## Description

### TECHNICAL FIELD

### [Cross-reference to Related Applications]

The present application claims the benefit of priority based on Korean Patent Application No. 10-2022-0176493, filed on December 16, 2022, the entire contents of which are incorporated herein by reference.

### [Technical Field]

The present invention relates to a method for preparing a conjugated diene-based polymer and a method for preparing a graft copolymer.

### BACKGROUND ART

Acrylonitrile-butadiene-styrene (ABS) copolymers are prepared by graft copolymerization of styrene and acrylonitrile onto a butadiene rubber polymer. The ABS copolymers have excellent impact resistance, chemical resistance, thermal stability, colorability, fatigue resistance, rigidity and processability when compared to the conventional high-impact polystyrene (HIPS), and are used in parts such as the interior and exterior materials of cars, office equipment, and various electrical and electronic products, or toys.

Rubber polymers included in the ABS copolymers are generally prepared through the emulsion polymerization of a conjugated diene-based monomer, and the particle size of the rubber polymer in a rubber polymer latex including the rubber polymer prepared by emulsion polymerization has a very significant influence on the final physical properties.

Generally, if the particle size of the rubber polymer increases, the impact strength of a resin composition including an ABS copolymer increases, and a lot of effort for increasing the particle size of the rubber polymer is being continued. According to an aspect of a method for increasing the particle size of a rubber polymer, after polymerizing a rubber polymer having a small particle diameter, the particle size is increased through an additional process such as enlargement through agglomeration, or through the increase of a polymerization time during preparing the rubber polymer. However, if the rubber polymer is prepared like this, the improvement of productivity is limited due to the additional process and the increase of the polymerization time, and there are defects of showing limitation in increasing the particle size of the rubber polymer.

### [Prior Art Document]

### [Patent Document]

(Patent Document 1) JP 1996-259777 A

### DISCLOSURE OF THE INVENTION

### TECHNICAL PROBLEM

The present invention has been devised to solve the above-described problems mentioned in the background art, and an object is to provide a method for preparing a conjugated diene-based polymer which may increase the particle size of the conjugated diene-based polymer without an additional process such as enlargement through agglomeration or the increase of a polymerization time.

In addition, another object of the present invention is to provide a method for preparing a graft copolymer which may improve the impact strength of a resin composition even further by a conjugated diene-based polymer having increased particle size.

### TECHNICAL SOLUTION

In order to solve the above-described tasks, the present invention provides a method for preparing a conjugated diene-based polymer and a method for preparing a graft copolymer.
(1) The present invention provides a method for preparing a conjugated diene-based polymer, comprising a step (S10) of polymerizing a conjugated diene-based monomer in the presence of a sulfate and a carbonate, wherein the sulfate and the carbonate are injected in a weight ratio of 1:0.08 to 9.2.
(2) The present invention provides the method for preparing a conjugated diene-based polymer according to (1), wherein the sulfate and the carbonate are injected in the weight ratio of 1:0.1 to 9.0.
(3) The present invention provides the method for preparing a conjugated diene-based polymer according to (1) or (2), wherein the sulfate is an alkali metal sulfate.
(4) The present invention provides the method for preparing a conjugated diene-based polymer according to any one of (1) to (3), wherein the carbonate is an alkali metal carbonate.
(5) The present invention provides the method for preparing a conjugated diene-based polymer according to any one of (1) to (4), wherein the sulfate and the carbonate are injected in 0.3 parts by weight to 1.5 parts by weight on the basis of 100 parts by weight of the conjugated diene-based monomer.
(6) The present invention provides the method for preparing a conjugated diene-based polymer according to any one of (1) to (5), wherein the conjugated diene-based polymer prepared in step (S10) has an average particle diameter of 50 nm to 500 nm.
(7) The present invention provides the method for preparing a conjugated diene-based polymer according to any one of (1) to (6), wherein the conjugated diene-based polymer prepared in step (S10) has an average particle diameter of 300 nm to 500 nm.
(8) The present invention provides a method for preparing a graft copolymer, comprising a step (S20) of injecting an aromatic vinyl-based monomer and a vinylcyan-based monomer in the presence of a conjugated diene-based polymer latex prepared according to any one of (1) to (7) to prepare a graft copolymer latex comprising a graft copolymer.
(9) The present invention provides the method for preparing a graft copolymer according to (8), wherein the step (S20) is performed by injecting, on the basis of a total amount of the conjugated diene-based polymer, the aromatic vinyl-based monomer and the vinylcyan-based monomer, 50 wt% to 70 wt% of the conjugated diene-based polymer latex based on the solid content, 10 wt% to 40 wt% of the aromatic vinyl-based monomer, and 1 wt% to 20 wt% of the vinylcyan-based monomer.
(10) The present invention provides a conjugated diene-based polymer prepared according to any one of (1) to (7).
(11) The present invention provides a graft copolymer prepared according to (8) or (9).
(12) The present invention provides a graft copolymer comprising the conjugated diene-based polymer according to (10), an aromatic vinyl-based monomer unit and a vinylcyan-based monomer unit.
(13) The present invention provides a resin composition comprising the graft copolymer according to (11) or (12), and a styrene-based copolymer.

### ADVANTAGEOUS EFFECTS

If a conjugated diene-based polymer is prepared according to the method for preparing a conjugated diene-based polymer of the present invention, the particle size of the conjugated diene-based polymer may be increased without an additional process such as enlargement through agglomeration, or the increase of a polymerization time.

In addition, if a graft copolymer is prepared according to the method for preparing a graft copolymer of the present invention, the impact strength of a resin composition may be improved even further from the conjugated diene-based polymer having an increased particle size.

### BEST MODE FOR CARRYING OUT THE INVENTION

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

The term "monomer unit" in the present invention may represent a component or a structure derived from the monomer or the material itself, in a particular embodiment, may mean a repeating unit formed in the polymer during polymerizing a polymer through the participation of the monomer injected in a polymerization reaction.

The term "composition" used in the present invention includes a reaction product and a decomposition product formed from the materials of a corresponding composition as well as a mixture of materials including the corresponding composition.

The present invention provides a method for preparing a conjugated diene-based polymer.

According to an embodiment of the present invention, the method for preparing a conjugated diene-based polymer may include a step (S10) of polymerizing a conjugated diene-based monomer in the presence of a sulfate and a carbonate, wherein the sulfate and the carbonate may be injected in a weight ratio of 1:0.08 to 9.2.

According to an embodiment of the present invention, the polymerization of step (S10) is a step for preparing a conjugated diene-based polymer latex including the conjugated diene-based polymer, and the polymerization in step (S10) may be performed by an emulsion polymerization.

According to an embodiment of the present invention, the conjugated diene-based monomer may be one or more selected from the group consisting of 1,3-butadiene, 2,3-dimethyl-1,3-butadiene, piperylene, 3-butyl-1,3-octadiene, isoprene and 2-phenyl-1,3-butadiene, more particularly, 1,3-butadiene.

According to an embodiment of the present invention, in step (S10), the total amount of the conjugated diene-based monomer may be injected in batch prior to initiating polymerization, or a portion may be injected prior to initiating polymerization and a remaining amount may be injected during performing polymerization. In performing step (S10), if the conjugated diene-based monomer is injected in installments by dividing into a point prior to initiating polymerization and a point during performing polymerization, effects of increasing the average particle diameter of the conjugated diene-based polymer and improving the particle size uniformity of the prepared conjugated diene-based polymer may obtained. In a particular embodiment, in step (S10), the conjugated diene-based monomer may be injected in 30 wt% to 70 wt% or 40 wt% to 60 wt% prior to initiating polymerization, and in 30 wt% to 70 wt% or 40 wt% to 60 wt% during performing polymerization. In a more particular embodiment, in step (S10), the conjugated diene-based monomer may be injected in 30 wt% to 70 wt% or 40 wt% to 60 wt% prior to initiating polymerization, in 15 wt% to 35 wt% or 20 wt% to 30 wt% at a point where a polymerization conversion ratio is 40% to 60%, and in 15 wt% to 35 wt% or 20 wt% to 30 wt% at a point where a polymerization conversion ratio is 65% to 80%.

According to an embodiment of the present invention, the emulsion polymerization in step (S10) may be performed in the presence of an emulsifier, and the emulsifier may be a fatty acid-based emulsifier or a dimer-based emulsifier of a fatty acid.

According to an embodiment of the present invention, the amount of the emulsifier in step (S10) may be 0.1 parts by weight to 10.0 parts by weight, 0.8 parts by weight to 8.0 parts by weight, or 1.0 part by weight to 6.0 parts by weight on the basis of 100 parts by weight of the conjugated diene-based monomer, and within this range, effects of preparing a conjugated diene-based polymer having an average particle diameter suitable for securing impact resistance may be obtained.

According to an embodiment of the present invention, in step (S10), the total amount of the emulsifier may be injected in batch, or a portion may be injected prior to initiating polymerization and a remaining amount may be injected during performing polymerization. In performing step (S10), if the emulsifier is injected in installments by dividing a point prior to initiating polymerization and a point during performing polymerization, effects of improving the particle size uniformity of the prepared conjugated diene-based polymer may be obtained, while increasing the average particle diameter of the conjugated diene-based polymer. In a particular embodiment, in step (S10), a portion of the emulsifier may be injected prior to initiating polymerization and a remaining amount may be injected during performing polymerization.

According to an embodiment of the present invention, step (S10) may be performed by radical polymerization using an initiator used for emulsion polymerization, particularly, a water-soluble initiator, a peroxide-based initiator, a redox initiator, or an azo-based initiator. The water-soluble initiator may be potassium peroxide or ammonium peroxide, and the redox initiator may be, for example, one or more selected from the group consisting of t-butyl hydroperoxide, diisopropylbenzene hydroperoxide and cumene hydroperoxide, and in this case, effects of providing stable polymerization environments may be obtained. In addition, if the redox initiator is used, step (S10) may be performed by additionally including ferrous sulfate, dextrose and sodium pyrophosphate as a redox catalyst.

According to an embodiment of the present invention, the amount of the initiator in step (S10) may be 0.01 parts by weight to 5.00 parts by weight, 0.05 parts by weight to 3.00 parts by weight, or 0.1 parts by weight to 1.0 part by weight on the basis of 100 parts by weight of the conjugated diene-based monomer, and within this range, effects of preparing a conjugated diene-based polymer having an average particle diameter suitable for securing impact resistance may be obtained.

According to an embodiment of the present invention, in step (S10), the total amount of the initiator may be injected in batch prior to initiating polymerization, or a portion may be injected prior to initiating polymerization and a remaining portion may be injected during performing polymerization. In performing step (S10), if the initiator is injected in installments by dividing into a point prior to initiating polymerization and a point during performing polymerization, effects of increasing the average particle diameter of the conjugated diene-based polymer and improving the particle diameter uniformity of the conjugated diene-based polymer may be obtained.

According to an embodiment of the present invention, step (S10) may be performed in the presence of a molecular weight regulator, and the molecular weight regulator may be a mercaptan-based molecular weight regulator, particularly, t-dodecyl mercaptan.

According to an embodiment of the present invention, the amount of the molecular weight regulator in step (S10) may be 0.01 parts by weight to 5.00 parts by weight, 0.05 parts by weight to 3.00 parts by weight, or 0.1 parts by weight to 1.0 part by weight on the basis of 100 parts by weight of the conjugated diene-based monomer, and within this range, a conjugated diene-based polymer having an average particle diameter suitable for securing impact resistance may be prepared.

According to an embodiment of the present invention, in step (S10), the total amount of the molecular weight regulator may be injected in batch prior to initiating polymerization, or a portion may be injected prior to initiating polymerization and a remaining amount may be injected during performing polymerization. In performing step (S10), if the molecular weight regulator is injected in installments at a point prior to initiating polymerization and a point during performing polymerization, effects of improving the particle diameter uniformity of the prepared conjugated diene-based polymer may be obtained, while increasing the average particle diameter of the conjugated diene-based polymer. In a particular embodiment, in step (S10), a portion of the molecular weight regulator may be injected prior to initiating polymerization, and a remaining amount may be injected during performing polymerization.

According to an embodiment of the present invention, the emulsion polymerization in step (S10) may be performed in an aqueous solvent, and the aqueous solvent may be ion exchange water. Accordingly, the conjugated diene-based polymer which is emulsion polymerized in step (S10) may be obtained as a latex type in which conjugated diene-based polymer particles are dispersed as a colloid phase in an aqueous solvent.

According to an embodiment of the present invention, step (S10) may be performed in the presence of a sulfate and a carbonate, and in this case, the sulfate and the carbonate are electrolytes and may play the role of controlling the stability of the conjugated diene-based polymer latex and the average particle diameter of the conjugated diene-based polymer. Particularly, if polymerization is performed by including the sulfate and the carbonate simultaneously, latex stability may be improved even further, and the average particle diameter of the conjugated diene-based polymer may be easily controlled according to a target level.

According to an embodiment of the present invention, the sulfate and the carbonate may be injected in a weight ratio of 1:0.08 to 9.2. In a particular embodiment, the sulfate and the carbonate may be injected in a weight ratio of 1: 0.08 or more, 0.09 or more, 0.10 or more, or 0.11 or more, and 1: 9.20 or less, 9.15 or less, 9.10 or less, 9.05 or less, or 9.00 or less on the basis of a weight ratio (sulfate: carbonate), and within this range, the particle size of the conjugated diene-based polymer may be controlled to a suitable level, and impact resistance may be improved.

According to an embodiment of the present invention, the sulfate may be an alkali metal sulfate. In a particular embodiment, the alkali metal sulfate may be one or more selected from the group consisting of sodium sulfate, potassium sulfate, sodium hydrogen sulfate and potassium hydrogen sulfate, particularly, sodium sulfate.

According to an embodiment of the present invention, the carbonate may be an alkali metal carbonate. In a particular embodiment, the alkali metal carbonate may be one or more selected from the group consisting of sodium carbonate and potassium carbonate, particularly, potassium carbonate.

According to an embodiment of the present invention, the sulfate and the carbonate may be sodium sulfate and potassium carbonate, respectively, and in this case, latex stability may be improved even further, and the average particle diameter of the conjugated diene-based polymer may be easily controlled to a target level.

According to an embodiment of the present invention, the sulfate and the carbonate may be injected in 0.3 parts by weight to 1.5 parts by weight on the basis of 100 parts by weight of the conjugated diene-based monomer. In a particular embodiment, the sulfate and the carbonate may be injected in an amount of 0.1 parts by weight or more, 0.2 parts by weight or more, 0.3 parts by weight or more, 0.4 parts by weight or more, or 0.5 parts by weight or more, and 1.5 parts by weight or less, 1.4 parts by weight or less, 1.3 parts by weight or less, 1.2 parts by weight or less, 1.1 parts by weight or less, or 1.0 part by weight or less on the basis of 100 parts by weight of the conjugated diene-based monomer. Within the range, the particle size of the conjugated diene-based polymer may be increased even further. Here, the amount of the sulfate and the carbonate may be each amount of the sulfate and the carbonate, or a mixed amount of the sulfate and the carbonate.

According to an embodiment of the present invention, the conjugated diene-based polymer may have an average particle diameter of 50 nm to 500 nm. In a particular embodiment, the conjugated diene-based polymer may have an average particle diameter of 50 nm or more, 100 nm or more, 150 nm or more, 200 nm or more, 250 nm or more or 300 nm or more, and 500 nm or less, 490 nm or less, 480 nm or less, 470 nm or less, 460 nm or less, 450 nm or less, 440 nm or less, 430 nm or less, 420 nm or less, or 410 nm or less. The conjugated diene-based polymer is a conjugated diene-based polymer having a large diameter and may exhibit a large diameter through the preparation by step (S10).

The present invention provides a method for preparing a graft copolymer.

According to an embodiment of the present invention, the method for preparing a graft copolymer may include a step (S20) of injecting an aromatic vinyl-based monomer and a vinylcyan-based monomer and polymerizing in the presence of the conjugated diene-based polymer latex prepared according to the method for preparing a conjugated diene-based polymer to prepare a graft copolymer latex including a graft copolymer. In a particular embodiment, step (S20) may be a step of graft polymerizing the conjugated diene-based polymer included in the conjugated diene-based polymer latex prepared in step (S10) with the aromatic vinyl-based monomer and the vinylcyan-based monomer.

According to an embodiment of the present invention, the graft polymerization in step (S20) may be performed by emulsion polymerization. In addition, the graft polymerization in step (S20) may be performed in the conjugated diene-based polymer latex of a latex phase prepared in step (S10).

According to an embodiment of the present invention, step (S20) may be performed by radical polymerization using a peroxide-based, redox, or azo-based initiator, which may be used for graft emulsion polymerization. The redox initiator may be, for example, one or more selected from the group consisting of t-butyl hydroperoxide, diisopropylbenzene hydroperoxide and cumene hydroperoxide, and in this case, effects of providing stable polymerization environments may be obtained. In addition, if the redox initiator is used, ferrous sulfate, dextrose and sodium pyrophosphate may be further included as a redox catalyst.

According to an embodiment of the present invention, the graft emulsion polymerization in step (S20) may be performed in an aqueous solvent, and the aqueous solvent may be ion exchange water. Accordingly, the graft copolymer graft polymerized in step (S20) may be obtained as a latex type wherein graft copolymer particles are dispersed as a colloid phase in the aqueous solvent.

According to an embodiment of the present invention, the aromatic vinyl-based monomer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, the vinylcyan-based monomer may be one or more selected from the group consisting of acrylonitrile, methacrylonitrile, ethacrylonitrile, phenyl acrylonitrile and α-chloroacrylonitrile, particularly, acrylonitrile.

According to an embodiment of the present invention, the amount of the conjugated diene-based polymer latex injected in step (S20) may be 50 wt% to 70 wt%, particularly, 50 wt% or more, 55 wt% or more or 60 wt% or more, and 70 wt% or less, 65 wt% or less or 60 wt% or less on the basis of the total amount of the conjugated diene-based polymer, the aromatic vinyl-based monomer and the vinylcyan-based monomer. Within this range, the impact strength and flexibility by the graft copolymer may be improved even further.

According to an embodiment of the present invention, the amount of the aromatic vinyl-based monomer injected in step (S20) may be 10 wt% to 40 wt%, particularly, 10 wt% or more, 15 wt% or more, 20 wt% or more, 25 wt% or more or 30 wt% or more, and 40 wt% or less, 35 wt% or less or 30 wt% or less on the basis of the total amount of the conjugated diene-based polymer, the aromatic vinyl-based monomer and the vinylcyan-based monomer. Within this range, effects of improving the dispersibility of the graft copolymer in a resin composition may be obtained, while securing the mechanical properties of the graft copolymer.

According to an embodiment of the present invention, the amount of the vinylcyan-based monomer injected in step (S20) may be 1 wt% to 20 wt%, particularly, 1 wt% or more, 2 wt% or more, 3 wt% or more, 4 wt% or more, 5 wt% or more, 6 wt% or more, 7 wt% or more, 8 wt% or more, 9 wt% or more or 10 wt% or more, and 20 wt% or less, 19 wt% or less, 18 wt% or less, 17 wt% or less, 16 wt% or less, 15 wt% or less, 14 wt% or less, 13 wt% or less, 12 wt% or less, 11 wt% or less or 10 wt% or less on the basis of the total amount of the conjugated diene-based polymer, the aromatic vinyl-based monomer and the vinylcyan-based monomer. Within this range, effects of improving the dispersibility of the graft copolymer in a resin composition may be obtained, while securing the mechanical properties of the graft copolymer.

The present invention provides a conjugated diene-based polymer prepared according to the method for preparing a conjugated diene-based polymer and a graft copolymer prepared according to the method for preparing a graft copolymer.

According to an embodiment of the present invention, the graft copolymer may include a conjugated diene-based polymer, an aromatic vinyl-based monomer unit and a vinylcyan-based monomer unit.

According to an embodiment of the present invention, the conjugated diene-based polymer may be the same as the conjugated diene-based polymer described in the method for preparing a graft copolymer, and the aromatic vinyl-based monomer unit and the vinylcyan-based monomer unit may mean repeating units formed by the participation of the aromatic vinyl-based monomer and the vinylcyan-based monomer described in the method for preparing a graft copolymer in a graft polymerization reaction.

According to an embodiment of the present invention, the amount of each of the conjugated diene-based polymer, the aromatic vinyl-based monomer unit and the vinylcyan-based monomer unit may be the same as the amounts of each component injected during the preparation of the graft copolymer.

The present invention provides a resin composition including the graft copolymer.

According to an embodiment of the present invention, the resin composition may include the graft copolymer and a styrene-based copolymer. The styrene-based copolymer may be a non-graft copolymer including an aromatic vinyl-based monomer, particularly, a copolymer including an aromatic vinyl-based monomer unit and a vinylcyan-based monomer unit. Here, the styrene-based copolymer may be a matrix resin which may be mixed together with the graft copolymer in the resin composition to form a matrix.

According to an embodiment of the present invention, the aromatic vinyl-based monomer forming the aromatic vinyl-based monomer unit of the styrene-based copolymer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, the vinylcyan-based monomer forming the vinylcyan-based monomer unit of the styrene-based copolymer may be one or more selected from the group consisting of acrylonitrile, methacrylonitrile, ethacrylonitrile, phenyl acrylonitrile and α-chloroacrylonitrile, particularly, acrylonitrile.

According to an embodiment of the present invention, the resin composition may include the graft copolymer in 10 wt% to 40 wt%, 15 wt% to 35 wt%, or 20 wt% to 30 wt%; and a copolymer including the aromatic vinyl-based monomer unit and the vinylcyan-based monomer unit in 60 wt% to 90 wt%, 65 wt% to 85 wt%, or 70 wt% to 80 wt%, and within this range, the deterioration of the processability of the resin composition including the graft copolymer may be prevented, while maximizing mechanical properties, particularly, impact resistance.

According to an embodiment of the present invention, each of the graft copolymer and the styrene-based copolymer includes the aromatic vinyl-based monomer unit and the vinylcyan-based monomer unit, and if the types of the aromatic vinyl-based monomer units and the vinylcyan-based monomer units, forming each of the copolymers are the same, the same components may be mixed and dispersed during the extrusion process of the resin composition, and in a practical resin composition and a molded product molded therefrom, a conjugated diene-based polymer may be present in a dispersed shape in a matrix formed from the aromatic vinyl-based monomer unit and the vinylcyan-based monomer unit. Accordingly, the amounts of the graft copolymer and the styrene-based copolymer in the resin composition may be confirmed from the total amount of the aromatic vinyl-based monomer unit and the vinylcyan-based monomer unit, and the amount of the conjugated diene-based polymer.

According to an embodiment of the present invention, the resin composition may have an impact strength measured at a thickness of 1/4 inch by ASTM D256 of 24.0 kgf·cm/cm or more, 24.5 kgf·cm/cm or more, or 24.8 kgf·cm/cm or more, and 30.0 kgf·cm/cm or less. Within the range, effects of the excellent impact strength of the resin composition including the graft copolymer may be obtained.

Hereinafter, embodiments of the present invention will be explained in detail so that a person skilled in the art could easily perform the present invention. However, the present invention may be accomplished in various other types and is not limited to the embodiments explained herein.

### Examples

### Example 1

### <Preparation of Conjugated Diene-based Polymer Latex>

To a nitrogen-substituted polymerization reactor, 70 parts by weight of ion exchange water, 80 parts by weight of 1,3-butadiene, 1.7 parts by weight of potassium oleate, 0.3 parts by weight of t-dodecyl mercaptan, 0.1 parts by weight of potassium carbonate (K₂CO₃) and 0.9 parts by weight of sodium sulfate (Na₂SO₄), as electrolytes, and 0.3 parts by weight of potassium persulfate were injected and stirred for sufficient mixing. Then, the internal temperature of a polymerization reactor was elevated to 75°C, 0.1 parts by weight of potassium persulfate was injected at a point where a polymerization conversion ratio reached 40%, the temperature was elevated to 85°C and a polymerization reaction was performed. At a point where a polymerization conversion ratio reached 50%, 20 parts by weight of 1,3-butadiene was injected, and at a point where a polymerization conversion ratio reached 90%, the reaction was finished to obtain a conjugated diene-based polymer latex (average particle diameter: 4,013 Å, the solid content: 55.3 wt%).

### <Preparation of Graft Copolymer Latex>

A monomer mixture including 30 parts by weight of styrene, 10 parts by weight of acrylonitrile, 100 parts by weight of ion exchange water, 0.05 parts by weight of t-butyl hydroperoxide, 0.5 parts by weight of potassium rosinate and 0.5 parts by weight of t-dodecyl mercaptan was prepared.

Separately, an activation agent mixture including 0.01 parts by weight of dextrose, 0.01 parts by weight of tetrasodium pyrophosphate, and 0.001 parts by weight of ferrous sulfate was prepared.

To a nitrogen-substituted polymerization reactor, 60 parts by weight (based on the solid content) of the prepared conjugated diene-based polymer latex, and 10 parts by weight of ion exchange water were injected, and the internal temperature of the polymerization reactor was elevated to 55°C. Then, a polymerization reaction was performed while continuously injecting to the polymerization reactor, the monomer mixture and the activation agent mixture for 2 hours. After finishing the continuous injection, to the polymerization reactor, 0.005 parts by weight of dextrose, 0.005 parts by weight of tetrasodium pyrophosphate, 0.0005 parts by weight of ferrous sulfate and 0.1 parts by weight of t-butyl hydroperoxide were injected, the internal temperature of the polymerization reactor was elevated to 80°C over 1 hour, and the polymerization was finished to prepare a graft copolymer latex including a graft copolymer.

### <Preparation of Graft Copolymer Particulate Material>

To 100 parts by weight of the prepared graft copolymer latex based on the solid content, 2.0 parts by weight of magnesium sulfate (MgSO₄) was injected and subjected to agglomeration at 85°C. Then, the resultant was aged for 10 minutes, while elevating the temperature from 85°C to 95°C, washed, dehydrated and dried to prepare a graft copolymer particulate material.

### Example 2

The same method as in Example 1 was performed except for injecting 0.5 parts by weight instead of 0.1 parts by weight of potassium carbonate, and 0.5 parts by weight instead of 0.9 parts by weight of sodium sulfate during preparing a conjugated diene-based polymer latex, in Example 1 to prepare a conjugated diene-based polymer latex, a graft copolymer latex and a graft copolymer particulate material.

### Example 3

The same method as in Example 1 was performed except for injecting 0.9 parts by weight instead of 0.1 parts by weight of potassium carbonate, and 0.1 parts by weight instead of 0.9 parts by weight of sodium sulfate during preparing a conjugated diene-based polymer latex, in Example 1 to prepare a conjugated diene-based polymer latex, a graft copolymer latex and a graft copolymer particulate material.

### Comparative Example 1

The same method as in Example 1 was performed except for injecting 1.0 part by weight instead of 0.1 parts by weight of potassium carbonate, and not injecting sodium sulfate during preparing a conjugated diene-based polymer latex, in Example 1 to prepare a conjugated diene-based polymer latex, a graft copolymer latex and a graft copolymer particulate material.

### Comparative Example 2

The same method as in Example 1 was performed except for injecting 0.95 parts by weight instead of 0.1 parts by weight of potassium carbonate, and 0.05 parts by weight instead of 0.9 parts by weight of sodium sulfate during preparing a conjugated diene-based polymer latex, in Example 1 to prepare a conjugated diene-based polymer latex, a graft copolymer latex and a graft copolymer particulate material.

### Comparative Example 3

The same method as in Example 1 was performed except for injecting 0.05 parts by weight instead of 0.1 parts by weight of potassium carbonate, and 0.95 parts by weight instead of 0.9 parts by weight of sodium sulfate during preparing a conjugated diene-based polymer latex, in Example 1. However, agglomeration phenomenon occurred due to the deterioration of latex stability during preparing the conjugated diene-based polymer latex, and a graft copolymer could not be prepared.

### Comparative Example 4

The same method as in Example 1 was performed except for not injecting potassium carbonate, and injecting 1.0 part by weight instead of 0.9 parts by weight of sodium sulfate during preparing a conjugated diene-based polymer latex, in Example 1. However, agglomeration phenomenon occurred due to the deterioration of latex stability during preparing the conjugated diene-based polymer latex, and a graft copolymer could not be prepared.

### Comparative Example 5

The same method as in Example 1 was performed except for injecting 0.5 parts by weight instead of 0.1 parts by weight of potassium carbonate, and 0.5 parts by weight of potassium chloride (KCl) instead of 0.9 parts by weight of sodium sulfate during preparing a conjugated diene-based polymer latex, in Example 1 to prepare a conjugated diene-based polymer latex, a graft copolymer latex and a graft copolymer particulate material.

### Comparative Example 6

The same method as in Example 1 was performed except for injecting 0.5 parts by weight instead of 0.1 parts by weight of potassium carbonate, and 0.5 parts by weight of potassium bicarbonate (KHCO₃) instead of 0.9 parts by weight of sodium sulfate during preparing a conjugated diene-based polymer latex, in Example 1 to prepare a conjugated diene-based polymer latex, a graft copolymer latex and a graft copolymer particulate material.

### Comparative Example 7

The same method as in Example 1 was performed except for injecting 0.5 parts by weight instead of 0.1 parts by weight of potassium carbonate, and 0.5 parts by weight of potassium bisulfite (KHSO₃) instead of 0.9 parts by weight of sodium sulfate during preparing a conjugated diene-based polymer latex, in Example 1 to prepare a conjugated diene-based polymer latex, a graft copolymer latex and a graft copolymer particulate material.

### Comparative Example 8

The same method as in Example 1 was performed except for injecting 0.5 parts by weight instead of 0.1 parts by weight of potassium carbonate, and 0.5 parts by weight of potassium phosphate (K₃PO₄) instead of 0.9 parts by weight of sodium sulfate during preparing a conjugated diene-based polymer latex, in Example 1 to prepare a conjugated diene-based polymer latex, a graft copolymer latex and a graft copolymer particulate material.

### Comparative Example 9

The same method as in Example 1 was performed except for injecting 0.5 parts by weight instead of 0.9 parts by weight of sodium sulfate, and 0.5 parts by weight of potassium chloride (KCl) instead of 0.1 parts by weight of potassium carbonate during preparing a conjugated diene-based polymer latex, in Example 1 to prepare a conjugated diene-based polymer latex, a graft copolymer latex and a graft copolymer particulate material.

### Comparative Example 10

The same method as in Example 1 was performed except for injecting 0.5 parts by weight instead of 0.9 parts by weight of sodium sulfate, and 0.5 parts by weight of potassium bicarbonate (KHCO₃) instead of 0.1 parts by weight of potassium carbonate during preparing a conjugated diene-based polymer latex, in Example 1 to prepare a conjugated diene-based polymer latex, a graft copolymer latex and a graft copolymer particulate material.

### Comparative Example 11

The same method as in Example 1 was performed except for injecting 0.5 parts by weight instead of 0.9 parts by weight of sodium sulfate, and 0.5 parts by weight of potassium bisulfite (KHSO₃) instead of 0.1 parts by weight of potassium carbonate during preparing a conjugated diene-based polymer latex, in Example 1 to prepare a conjugated diene-based polymer latex, a graft copolymer latex and a graft copolymer particulate material.

### Comparative Example 12

The same method as in Example 1 was performed except for injecting 0.5 parts by weight instead of 0.9 parts by weight of sodium sulfate, and 0.5 parts by weight of potassium phosphate (K₃PO₄) instead of 0.1 parts by weight of potassium carbonate during preparing a conjugated diene-based polymer latex, in Example 1 to prepare a conjugated diene-based polymer latex, a graft copolymer latex and a graft copolymer particulate material.

### Experimental Examples

### Experimental Example 1

With respect to the conjugated diene-based polymer latexes prepared in Examples 1 to 3 and Comparative Examples 1 to 12, average particle diameters were measured by the method below and are shown in Table 1 together with the amounts of electrolytes injected during preparing the conjugated diene-based polymer latexes.

* Average particle diameter (Å): 1 g of a conjugated diene-based polymer latex was diluted in 100 g of distilled water, and measurement was conducted by a dynamic light scattering method using a Nicomp 370 HPL equipment of Particle Sizing Systems (PSS) Co.

**[Table 1]**

| Division | K₂CO₃ | Na₂SO₄ | KCl | KHCO₃ | KHSO₃ | K₃PO₄ | Average particl e diamete r |
|---|---|---|---|---|---|---|---|
| | (parts by weight) | (parts by weight) | (parts by weight) | (parts by weight) | (parts by weight) | (parts by weight) | (Å) |
| Example 1 | 0.1 | 0.9 | - | - | - | - | 4,013 |
| Example 2 | 0.5 | 0.5 | - | - | - | - | 3,488 |
| Example 3 | 0.9 | 0.1 | - | - | - | - | 3,196 |
| Comparative Example 1 | 1.0 | - | - | - | - | - | 2,997 |
| Comparative Example 2 | 0.95 | 0.05 | - | - | - | - | 3,025 |
| Comparative Example 3 | 0.05 | 0.95 | - | - | - | - | - |
| Comparative Example 4 | - | 1.0 | - | - | - | - | - |
| Comparative Example 5 | 0.5 | - | 0.5 | - | - | - | 2,205 |
| Comparative Example 6 | 0.5 | - | - | 0.5 | - | - | 2,711 |
| Comparative Example 7 | 0.5 | - | - | - | 0.5 | - | 2,944 |
| Comparative Example 8 | 0.5 | - | - | - | - | 0.5 | 2,221 |
| Comparative Example 9 | - | 0.5 | 0.5 | - | - | - | 2,405 |
| Comparative Example 10 | - | 0.5 | - | 0.5 | - | - | 2,718 |
| Comparative Example 11 | - | 0.5 | - | - | 0.5 | - | 2,881 |
| Comparative Example 12 | - | 0.5 | - | - | - | 0.5 | 2,455 |

As shown in Table 1, it can be confirmed that the conjugated diene-based polymers of Examples 1 to 3, prepared according to the present invention showed increased particle size without an additional process such as enlargement through agglomeration or the increase of polymerization time.

On the contrary, it can be confirmed that Comparative Example 1 wherein only a carbonate was injected during polymerization, and Comparative Example 2 wherein a sulfate and a carbonate were injected simultaneously, but the ratio of a carbonate was excessive, showed insufficient increase of the particle size of the conjugated diene-based polymers.

In addition, though a sulfate and a carbonate were injected simultaneously, it can be confirmed that Comparative Example 3 wherein the ratio of a sulfate was excessive and Comparative Example 4 wherein only a sulfate was injected, showed the generation of agglomeration phenomenon due to the deterioration of latex stability.

In addition, it can be confirmed that Comparative Examples 5 to 8 wherein a carbonate and a chloride, a bicarbonate, a bisulfite, and a triphosphate were injected and Comparative Examples 9 to 12 wherein a sulfate and a chloride, a bicarbonate, a bisulfite, and a triphosphate were injected rather than the sulfate and the carbonate, showed the insufficient increase of the particle size of the conjugated diene-based polymers.

### Experimental Example 2

By using the graft copolymer particulate materials prepared in Examples 1 to 3 and Comparative Examples 1 to 12, resin compositions were prepared by the methods below, and resin composition pellets were injected at 210°C, and the impact strength thereof was measured by a method below and showed in Table 2.

### <Preparation of Resin Composition>

23 parts by weight of each of the graft copolymer particulate materials prepared above, 77 parts by weight of a styrene-acrylonitrile copolymer (manufactured by LG Chem, product name of 92HR), 1.5 part by weight of a lubricant and 0.3 parts by weight of a thermal stabilizer were injected into a twin-screw extruder, and then mixed and extruded at 210°C to manufacture a resin composition pellet.

* Impact strength (kgf·cm/cm): According to an ASTM D256 method, a notch was made on a specimen with a thickness of 1/4 inch, and notched izod impact strength was measured at room temperature (23°C) using an impact strength measurement equipment (TINIUS OLSEN Co.).

**[Table 2]**

| Division | Impact strength |
|---|---|
| | (kgf·cm/cm) |
| Example 1 | 25.2 |
| Example 2 | 25.8 |
| Example 3 | 24.8 |
| Comparative Example 1 | 15.3 |
| Comparative Example 2 | 15.1 |
| Comparative Example 3 | - |
| Comparative Example 4 | - |
| Comparative Example 5 | 11.4 |
| Comparative Example 6 | 16.5 |
| Comparative Example 7 | 17.1 |
| Comparative Example 8 | 13.0 |
| Comparative Example 9 | 13.3 |
| Comparative Example 10 | 15.4 |
| Comparative Example 11 | 16.1 |
| Comparative Example 12 | 16.0 |

As shown in Table 2, it can be confirmed that all resin compositions including the graft copolymers prepared by including the conjugated diene-based polymers of Examples 1 to 3 prepared according to the present invention showed excellent impact strength.

On the contrary, it can be confirmed that the resin compositions including the graft copolymers prepared by including the conjugated diene-based polymer prepared in Comparative Example 1 wherein only a carbonate was injected as an electrolyte and Comparative Example 2 wherein a sulfate was injected together but in an insufficient amount, during preparing conjugated diene-based polymer latexes, showed inferior impact strength.

In addition, though a carbonate and a sulfate were injected together as electrolytes during preparing a conjugated diene-based polymer latex, in the cases of Comparative Example 3 wherein an excessive amount of a sulfate was injected and Comparative Example 4 wherein only a sulfate was injected, agglomeration phenomenon occurred due to the deterioration of latex stability during preparing conjugated diene-based polymer latexes, and accordingly, the preparation of graft copolymers and resin compositions was impossible, and the measurement of the impact strength was impossible.

In addition, all the resin compositions including the graft copolymers prepared by including the conjugated diene-based polymers prepared in Comparative Examples 5 to 8 wherein a carbonate and a chloride, a bicarbonate, a bisulfite, and a triphosphate were injected, and Comparative Examples 9 to 12 wherein a sulfate and a chloride, a bicarbonate, a bisulfite, and a triphosphate were injected rather than the sulfate and the carbonate as electrolytes during preparing the conjugated diene-based polymer latexes, were confirmed to show inferior impact strength.

From such results, it can be confirmed that if a conjugated diene-based polymer is prepared according to the method for preparing a conjugated diene-based polymer of the present invention, the particle size of a conjugated diene-based polymer can be increased without an additional process such as enlargement through agglomeration or the increase of polymerization time, and further, the impact strength of a resin composition can be improved even further from the conjugated diene-based polymer having increased particle size during preparing a graft copolymer.

## Claims

1. A method for preparing a conjugated diene-based polymer, the method comprising:
a step (S10) of polymerizing a conjugated diene-based monomer in the presence of a sulfate and a carbonate,
wherein the sulfate and the carbonate are injected in a weight ratio of 1:0.08 to 9.2.

2. The method for preparing a conjugated diene-based polymer according to claim 1, wherein the sulfate and the carbonate are injected in the weight ratio of 1:0.1 to 9.0.

3. The method for preparing a conjugated diene-based polymer according to claim 1, wherein the sulfate is an alkali metal sulfate.

4. The method for preparing a conjugated diene-based polymer according to claim 1, wherein the carbonate is an alkali metal carbonate.

5. The method for preparing a conjugated diene-based polymer according to claim 1, wherein the sulfate and the carbonate are injected in 0.3 parts by weight to 1.5 parts by weight on the basis of 100 parts by weight of the conjugated diene-based monomer.

6. The method for preparing a conjugated diene-based polymer according to claim 1, wherein the conjugated diene-based polymer prepared in step (S10) has an average particle diameter of 50 nm to 500 nm.

7. The method for preparing a conjugated diene-based polymer according to claim 1, wherein the conjugated diene-based polymer prepared in step (S10) has an average particle diameter of 300 nm to 500 nm.

8. A method for preparing a graft copolymer, the method comprising:
a step (S20) of injecting an aromatic vinyl-based monomer and a vinylcyan-based monomer in the presence of a conjugated diene-based polymer latex prepared according to claim 1 to prepare a graft copolymer latex comprising a graft copolymer.

9. The method for preparing a graft copolymer according to claim 8, wherein the step (S20) is performed by injecting, on the basis of a total amount of the conjugated diene-based polymer, the aromatic vinyl-based monomer and the vinylcyan-based monomer,
50 wt% to 70 wt% of the conjugated diene-based polymer latex based on the solid content,
10 wt% to 40 wt% of the aromatic vinyl-based monomer,
and
1 wt% to 20 wt% of the vinylcyan-based monomer.
